# FASCICULE DE BREVET EUROPEEN

(11) **EP 1 116 130 B1**
(45) Date de publication et mention de la délivrance du brevet: **22.06.2005**
(21) Numéro de dépôt: 00949598.7
(22) Date de dépôt: 30.06.2000
(51) Int. Cl.: G06F 15/80, G06F 11/20

(54) **RESEAU DE PROCESSEURS PARALLELES AVEC TOLERANCE AUX FAUTES DE CES PROCESSEURS, ET PROCEDE DE RECONFIGURATION APPLICABLE A UN TEL RESEAU**
GATTER VON PARALLELEN PROZESSOREN MIT FEHLERTOLERANZ DER PROZESSOREN UND REKONFIGURIERUNGSVERFAHREN DAFÜR
NETWORK OF PARALLEL PROCESSORS FAULT-TOLERANT TOWARDS SAID PROCESSORS AND RECONFIGURATION METHOD APPLICABLE TO SUCH A NETWORK

(30) Priorité: 02.07.1999 FR 9908553
(43) Date de publication de la demande: 18.07.2001
(73) Titulaire: COMMISSARIAT A L'ENERGIE ATOMIQUE, 75752 Paris Cédex 15 (FR)
(72) Inventeur: CLERMIDY, Fabien, F-91300 Massy (FR); COLLETTE, Thierry, F-91940 Les Ulis (FR)
(74) Mandataire: Weber, Etienne Nicolas
(86) Numéro de dépôt international: PCT/FR2000/001860
(87) Numéro de publication internationale: WO 2001/002975

(56) Documents cités:
- MAHAPATRA N R ET AL: "HARDWARE-EFFICIENT AND HIGHLY-RECONFIGURABLE 4- AND 2-TRACK FAULT-TOLERANT DESIGNS FOR MESH-CONNECTED MULTICOMPUTERS" PROCEEDINGS OF THE INTERNATIONAL SYMPOSIUM ON FAULT-TOLERANT COMPUTING,US,LOS ALAMITOS, IEEE COMP. SOC. PRESS, vol. CONF. 26, 1996, pages 272-281, XP000679291 ISBN: 0-8186-7261-7 cité dans la demande
- POPLI S P ET AL: "A RECONFIGURABLE VLSI ARRAY FOR RELIABILITY AND YIELD ENHANCEMENT" PROCEEDINGS OF THE INTERNATIONAL CONFERENCE ON SYSTOLIC ARRAYS. FROM 1990 PROCEEDINGS OF THE INTERNATIONAL CONFERENCE ON APPLICATION SPECIFIC ARRAY PROCESSORS,US,WASHINGTON, IEEE COMP. SOC. PRESS, vol. CONF. 2, 1988, pages 631-642, XP000756117
- JOHN L K ET AL: "A DYNAMICALLY RECONFIGURABLE INTERCONNECT FOR ARRAY PROCESSORS" IEEE TRANSACTIONS ON VERY LARGE SCALE INTEGRATION (VLSI) SYSTEMS,US,IEEE INC. NEW YORK, vol. 6, no. 1, 1 mars 1998 (1998-03-01), pages 150-157, XP000739209 ISSN: 1063-8210
- SHIGEI N ET AL: "ON EFFICIENT SPARE ARRANGEMENTS AND AN ALGORITHM WITH RELOCATING SPARES FOR RECONFIGURING PROCESSOR ARRAYS" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, vol. E80-A, no. 6, 1 juin 1997 (1997-06-01), pages 988-995, XP000740592 ISSN: 0916-8508
- CLERMIDY F ET AL: "A new placement algorithm dedicated to parallel computers: bases and application" PROCEEDINGS 1999 PACIFIC RIM INTERNATIONAL SYMPOSIUM ON DEPENDABLE COMPUTING, PROCEEDINGS 1999 PACIFIC RIM INTERNATIONAL SYMPOSIUM ON DEPENDABLE COMPUTING, HONG KONG, 16-17 DEC. 1999, pages 242-249, XP002139232 1999, Los Alamitos, CA, USA, IEEE Comput. Soc, USA ISBN: 0-7695-0371-3

## Description

### Domaine technique

La présente invention concerne un réseau de processeurs parallèles avec tolérance aux fautes de ces processeurs, et un procédé de reconfiguration applicable à un tel réseau.

Le domaine de l'invention est celui des calculateurs parallèles pour tous types d'application. Deux exemples d'applications sont ainsi donnés dans le document référencé [1] en fin de description.

### Etat de la technique antérieure

Les possibilités croissantes de la technologie micro-électronique, de même que l'évolution des architectures multiprocesseurs, conduisent à des calculateurs de plus en plus complexes tant en termes d'éléments qui les composent (portes électroniques, mémoires, registres, processeurs...), qu'en termes de complexité des logiciels utilisés.

Les concepteurs de tels calculateurs à structure parallèle ou massivement parallèle très intégrée doivent prendre en compte deux exigences antagonistes :
1- Des machines à structure parallèle ou massivement parallèle sont sujettes à des défauts dus au nombre très important de processeurs et à la complexité de ceux-ci, ce qui induit un mauvais rendement de fabrication et des fautes graves en fonctionnement normal.
2- Avec des technologies très avancées et des systèmes très intégrés, de plus en plus de processeurs peuvent être incorporés dans un circuit intégré spécifique (en anglais ASIC ou « Application Specific Integrated Circuit »), un module multipuce (en anglais MCM ou « Multichip Module ») ou une carte. Dans de tels systèmes le principal inconvénient est celui d'une bande passante, c'est-à-dire une quantité d'informations que l'on peut passer, limitée.

Pour répondre à la première de ces exigences, une solution de l'art connu consiste à remplacer les processeurs fautifs par des processeurs supplémentaires identiques aux autres du point de vue fonctionnel. Une telle solution, permettant une « tolérance aux fautes structurelle » , s'efforce alors de garantir le bon fonctionnement, et notamment la cohérence du réseau, pour ne pas pénaliser l'architecture. Elle implique une reconfiguration consistant dans le remplacement d'éléments fautifs par des éléments supplémentaires disponibles grâce à des éléments d'interconnexion et à des éléments d'intercommunication.

Dans un réseau de type 2D (ou en deux dimensions), les solutions proposées pour assurer la tolérance aux fautes consistent :
- à ajouter au système autant de lignes de processeurs qu'on veut tolérer de fautes. Cette solution est très simple et nécessite peu d'interconnexions supplémentaires, la reconfiguration s'effectuant par une simple dérivation (en anglais « Bypass ») des lignes où un processeur est fautif. Les pertes en performance sont alors limitées. Par contre, l'utilisation des processeurs supplémentaires est très mauvaise puisqu'il faut une ligne pour tolérer une faute, et qu'en cas de faute d'une dérivation le système complet est mis en défaut.
- ou, à ajouter des commutateurs, des processeurs supplémentaires et des connexions au réseau normal.

Comme décrit dans le document référencé [2], un réseau correspondant à ce second type de solution et appelé « m-Track, n-Spare » (ou « m chemins, n supplémentaires ») se compose de processeurs 10, de commutateurs et de connexions supplémentaires. Deux sortes de commutateurs sont utilisés : les commutateurs 11 reliant les processeurs aux connexions (PT pour « Processor to Track ») et les commutateurs 12 reliant les connexions entre elles (TT pour « Track-to-Track »). Toutes les liaisons du réseau sont bidirectionnelles, c'est-à-dire que les communications peuvent aller dans les deux sens dans chaque connexion. Des processeurs supplémentaires 13 (sp) sont positionnés aux frontières du réseau. Ces processeurs, pour que la méthode de reconfiguration soit efficace, doivent être placés au moins sur une ligne et une colonne du réseau.

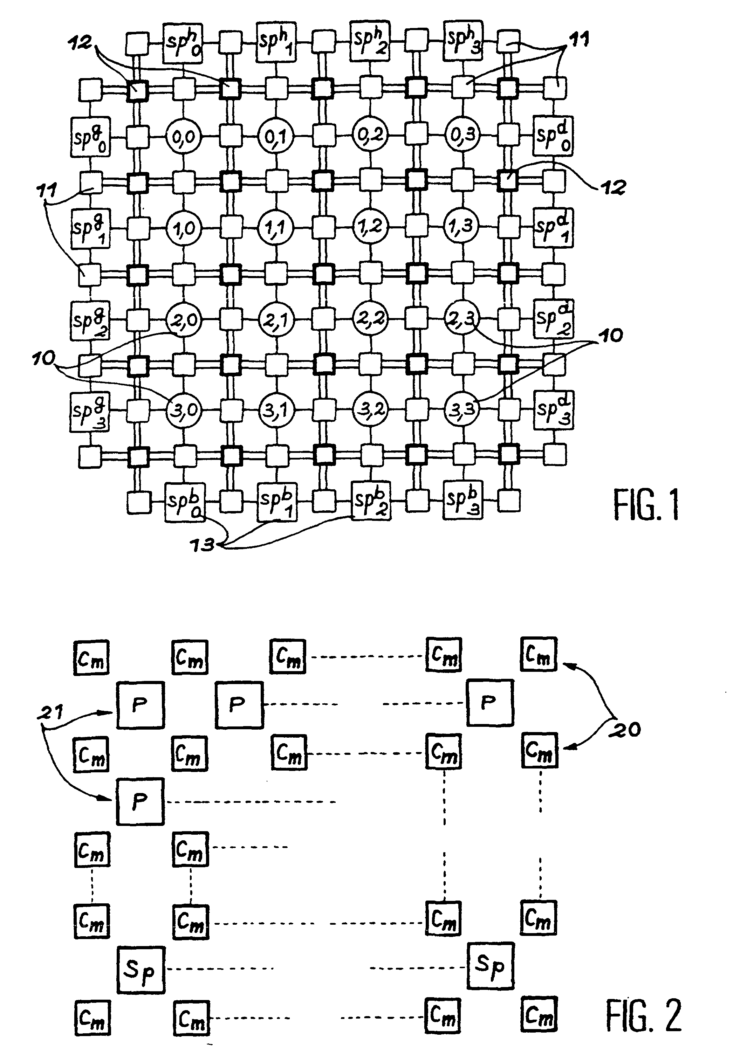

La figure 1 illustre un exemple de réseau de type « 2-Track, 2-Spare ». Des processeurs supplémentaires 13 (sp) sont placés tout autour du réseau et servent à reconfigurer le réseau en cas de faute des processeurs utiles 10. Des commutateurs 11, 12 sont utilisés pour permettre la reconfiguration. Le réseau comprend ici 200% de connexions supplémentaires par rapport aux connexions dites fonctionnelles.

L'homme de métier peut alors utiliser une méthode de reconfiguration, basée sur des codes correcteurs d'erreur, se décomposant en deux phases :
- la première consiste, pour chaque processeur fautif, à trouver un chemin de compensation qui mène du processeur fautif à un processeur supplémentaire ;
- En cas de réussite de la première phase, chaque processeur est, le long du chemin de compensation, remplacé par son plus proche voisin, en allant ainsi, par des changements en cascade, jusqu'à un processeur supplémentaire. La grille fonctionnelle est ainsi conservée.

Un tel réseau présente de nombreux inconvénients :
- La bidirectionalité des liaisons offre beaucoup de possibilités pour le routage entre processeurs, mais possède deux désavantages majeurs par rapport aux liaisons monodirectionnelles :
   - le temps de communication est très augmenté du fait, d'une part, de la programmation de la direction des liaisons et d'autre part, de la traversée des circuits nécessaires pour assurer de telles communications bidirectionnelles,
   - la complexité est accrue, car il est nécessaire de gérer les communications entre processeurs pour déterminer la direction de routage ;
- Le nombre de connexions ajoutées par rapport aux liaisons « utiles », qui est de 100% au minimum, rend une telle solution impropre pour des calculateurs parallèles très intégrés où la bande passante de certains niveaux, donc le nombre de connexions, est très limitée ;
- Le fait de devoir ajouter un nombre significatif de processeurs supplémentaires peut entraîner des problèmes, notamment pour les petits réseaux, composés d'une centaine de processeurs, où les processeurs supplémentaires peuvent être responsables de 40% des fautes possibles.

La méthode de reconfiguration considérée ci-dessus possède, quant à elle, deux désavantages majeurs :
- elle n'est pas adaptée au cas des liaisons monodirectionnelles ;
- le nombre d'éléments de commutation traversés entre deux processeurs voisins logiquement n'est pas déterministe, ce qui rend la méthode inefficace pour traiter le cas des communications synchrones entre processeurs.

Pour résoudre ces inconvénients, le réseau selon l'invention a pour objectif de résoudre le problème de la tolérance aux fautes dans une architecture massivement parallèle où les processeurs sont très fortement couplés, en proposant une solution répondant aux contraintes suivantes :
- obtenir un réseau tolérant aux fautes avec des connexions pouvant être monodirectionnelles ;
- limiter fortement les supports de communication non fonctionnels du réseau ;
- limiter le temps de communication entre processeurs en limitant le nombre de commutateurs de reconfiguration traversés entre deux processeurs ;
- autoriser une plus grande souplesse dans le choix du nombre de processeurs supplémentaires ;
- disposer d'une solution capable de supporter des topologies différentes de processeurs, notamment en matrice, en ligne ou en hypercube.

### Exposé de l'invention

L'invention concerne un réseau de processeurs élémentaires parallèles avec tolérance aux fautes de ces processeurs comportant lesdits processeurs élémentaires, des processeurs élémentaires supplémentaires, des éléments d'interconnexion de ces processeurs, et une unité de contrôle, le réseau comprenant une succession de lignes d'éléments d'interconnexion et de lignes de processeurs en alternance, chaque processeur étant entouré de quatre éléments d'interconnexion, les lignes de processeurs étant des lignes de processeurs élémentaires, la dernière ligne de processeurs étant une ligne de processeurs élémentaires supplémentaires, les éléments de bord du réseau étant des éléments d'interconnexion et en ce que l'unité de contrôle, reliée aux processeurs et aux éléments d'interconnexion, envoie les instructions aux processeurs, contrôle les éléments d'interconnexion, et vérifie l'intégrité de ces processeurs. Chaque processeur est relié à quatre éléments d'interconnexion, caractérisé en ce que deux de ces éléments diamétralement opposés sont connectés aux deux entrées du processeur, les deux autres éléments également diamétralement opposés sont connectés aux deux sorties de processeur, ces éléments d'interconnexion sont reliés entre eux par des liaisons verticales ou horizontales.

Avantageusement, les éléments d'interconnexion internes au réseau ont une complexité de six entrées et six sorties, quatre entrées et quatre sorties étant reliées aux éléments d'interconnexion internes au réseau voisins, et deux entrées et deux sorties étant reliées aux processeurs voisins de l'élément d'interconnexion interne au réseau voisin considéré.

Un élément d'interconnexion possède au moins une sortie ou une entrée monodirectionnelles reliée à une entrée ou une sortie d'au moins un processeur sud-ouest, nord-est, nord-ouest ou sud-est et au moins deux entrées et deux sorties monodirectionnelles reliées à au moins deux sorties et deux entrées des éléments d'interconnexion situés au nord, à l'est, au sud ou à l'ouest.

Dans un mode de réalisation, chaque processeur est un élément de calcul intégrant une unité logique et arithmétique, un ensemble de registres de travail et une logique de test permettant d'effectuer le test automatique de celui-ci. Un élément d'interconnexion est composé de plusieurs multiplexeurs de données de n entrées vers une sortie, chacun de ces multiplexeurs étant commandé par les fils de sélection de la voie de sortie afin de permettre de relier chacune des sorties de l'élément d'interconnexion à n'importe quelle entrée, les sélections des multiplexeurs étant mémorisées dans deux registres à l'intérieur de l'élément d'interconnexion.

Avantageusement les processeurs et les éléments d'interconnexion peuvent être intégrés dans un circuit intégré spécifique. L'unité de contrôle peut être intégrée dans des composants de logique reconfigurable.

La présente invention concerne également un procédé de reconfiguration du réseau de processeurs comprenant :
- une étape de placement des processeurs fonctionnels du réseau logique ;
- une étape de routage consistant en une programmation des éléments d'interconnexion sur le réseau physique, en choisissant le nombre maximal de ces éléments d'interconnexion pouvant être traversés entre deux processeurs voisins utilisant un algorithme de recherche du plus court chemin.

Dans ce procédé de l'invention :
- on détermine un ordre de placement des processeurs du réseau qui est constitué d'un processeur d'origine et d'une suite de processeurs englobant tous les processeurs ;
- pour chacun des processeurs on essaie de le placer en commençant par sa place logique puis, si nécessaire en cas d'échec, en chacune des places situées à une distance 1, à une distance 2... de la place logique de ce processeur, avec comme restriction qu'une et une seule place supplémentaire doit être utilisée par rapport aux places possibles des processeurs précédemment placés, en arrêtant lorsque S+1 places ont été essayées, S étant le nombre de processeurs supplémentaires ;
- si S+1 places ont été essayées sans succès, on revient au processeur précédent dans l'ordre de placement et on passe à la place suivante pour ce processeur ;
- éventuellement lorsque tous les processeurs sont placés, on vérifie pour chaque dimension du réseau que l'ordre logique est respecté pour chaque couple de processeurs, si ce n'est pas le cas on inverse les places de ces processeurs.

Dans un mode de réalisation, l'ordre de placement est défini ainsi : le processeur d'origine est le processeur en haut à gauche, les processeurs suivants sont les processeurs à droite et en bas du processeur d'origine, et ainsi de suite en respectant une diagonale.

On peut également découper le réseau en blocs et définir un ordre de placement des blocs en partant d'un bloc d'origine et en parcourant tous les blocs de bloc voisin en bloc voisin, les places pour les processeurs d'un bloc ne comportant pas de place logique des processeurs des blocs placés précédemment.

Avantageusement ce procédé de l'invention peut être mis en oeuvre soit de manière statique, soit de manière dynamique en cours de fonctionnement.

L'invention présente les avantages suivants :
- Le réseau proposé s'applique à tous types de calculateurs parallèles afin de rendre ceux-ci tolérants aux fautes des processeurs et de leurs interconnexions. La redondance est obtenue par un très faible volume d'électronique supplémentaire (ajout de quelques processeurs identiques aux autres).
- La structure d'interconnexion entre processeurs proposée permet de supporter différentes topologies d'architectures de calculateurs parallèles, topologies en grille, tore ou anneau de processeurs par exemple.
- Les cinq contraintes posées plus haut du problème à résoudre sont résolues grâce à ce réseau et au procédé de reconfiguration associée.
- La structure proposée peut être utilisée comme réseau complet ou comme élément de réseau, donc avec une reconfiguration globale ou locale. La structure, utilisée comme élément de réseau, est particulièrement adaptée aux structures très intégrées à bande passante très limitée. La structure, utilisée comme réseau complet, est adaptée aux structures intégrées demandant une forte tolérance aux fautes.
- Si un contrôle par des portes logiques autorise ou non la distribution de l'horloge sur chaque processeur, la consommation ainsi que la dissipation thermique du réseau peuvent être améliorées et optimisées. Cette amélioration conduit à diminuer la température de fonctionnement des circuits de la structure et donc à en améliorer sa fiabilité.
- L'invention, adaptée à une structure fortement intégrée permet d'augmenter virtuellement le rendement de la fonderie silicium utilisée pour fabriquer le circuit. En effet, pour un composant traditionnel, si un transistor est mauvais le circuit est considéré comme mauvais, tandis qu'avec l'invention proposée le circuit reste fonctionnel même avec de très nombreux transistors défaillants, pourvu que ces transistors défaillants soient répartis dans un même processeur ou parmi des processeurs non groupés physiquement, la seule limite étant celle du nombre de processeurs supplémentaires.

### Brève description des dessins

La figure 1 illustre un réseau de processeurs de l'art connu.
La figure 2 illustre la composition du réseau de processeurs de l'invention.
La figure 3 illustre les entrées et sorties d'un élément d'interconnexion interne au réseau de l'invention.
Les figures 4A à 4H illustrent les entrées et sorties des éléments d'interconnexion aux frontières du réseau de l'invention.
La figure 5 illustre le réseau de l'invention, avec les liaisons entre processeurs et éléments d'interconnexion.
Les figures 6A à 6C illustrent les communications minimales dans le réseau de l'invention.
Les figures 7A et 7B illustrent un exemple de réseau de l'invention.
La figure 8 illustre la notion de distance dans le réseau illustré sur la figure 7B.
La figure 9 illustre un organigramme du procédé de l'invention.
Les figures 10A et 10B illustrent un exemple de non cohérence du procédé de l'invention après le placement des processeurs.
Les figures 11A, 11B et 11C illustrent un exemple d'algorithme de placement déduit directement du procédé de l'invention.
La figure 12 illustre un algorithme par bloc déduit du procédé de l'invention.
Les figures 13A et 13B illustrent des exemples de reconfiguration du réseau dans une topologie de matrice.
Les figures 14A et 14B illustrent la réalisation pratique d'un élément d'interconnexion à partir d'un multiplexeur 6 vers 1.
La figure 15 illustre un exemple de mise en oeuvre du réseau de l'invention.

### Exposé détaillé de modes de réalisation

La présente invention concerne d'une part un réseau de processeurs parallèles avec tolérance aux fautes de ces processeurs et d'autre part un procédé de reconfiguration d'un tel réseau.

### Réseau de processeurs parallèles

le réseau de processeurs de l'invention, comme illustré sur la figure 2, est basé sur une matrice de processeurs élémentaires quelconques P à deux entrées et deux sorties, reliés entre eux par des éléments d'interconnexion Cm. Le réseau est composé d'un ensemble de lignes d'éléments interconnexion 20 et de lignes de processeurs 21 disposées alternativement. Chaque processeur P est entouré de quatre éléments d'interconnexion Cm. Les éléments de bord du réseau sont des éléments d'interconnexion Cm. Les lignes de processeurs sont des lignes de processeurs élémentaires P et la dernière ligne de processeurs est une ligne de processeurs élémentaires supplémentaires Sp. Une telle caractéristique permet d'obtenir une plus grande souplesse dans le choix du nombre de processeurs supplémentaires contrairement au dispositif de l'art antérieur illustré sur la figure 1, dans lequel avec une ligne et une colonne de processeurs supplémentaires la proportion de processeurs supplémentaires varie en fonction du produit du nombre de lignes par le nombre de colonnes.

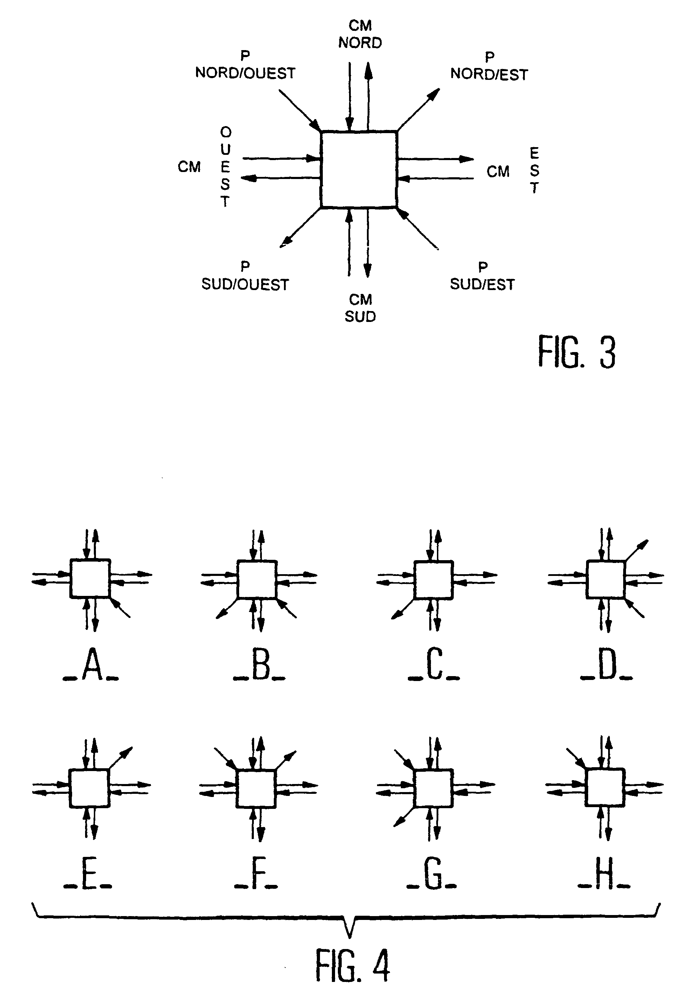

Les éléments d'interconnexion Cm permettent de réaliser les liaisons, par commutation du réseau, entre les différents processeurs P. Un élément Cm de ce type est illustré sur la figure 3, avec ses différentes entrées et sorties. Il possède six entrées et six sorties monodirectionnelles reliées respectivement aux entrées des processeurs sud-ouest et nord-est, aux sorties des processeurs nord-ouest et sud-est, et aux quatre entrées et quatre sorties des éléments d'interconnexion situés au nord, à l'est, au sud et à l'ouest. Un élément ainsi représenté correspond à un élément du centre du réseau.

Comme illustré sur les figures 4A à H, les éléments d'interconnexion des bords du réseau possèdent moins d'entrées et/ou moins de sorties selon leur emplacement.

On a ainsi :
- Cm nord-ouest : figure 4A ;
- Cm nord : figure 4B ;
- Cm nord-est : figure 4C ;
- Cm ouest : figure 4D ;
- Cm sud-ouest : figure 4E ;
- Cm sud : figure 4F ;
- Cm est : figure 4G ;
- Cm sud-est : figure 4H.

Chaque sortie d'un élément d'interconnexion Cm peut être reliée à n'importe quelle entrée. Il est possible de changer de façon dynamique la manière (appelée configuration) de réaliser ces liaisons au moyen, par exemple, de registres de configuration associés à une commande de configuration.

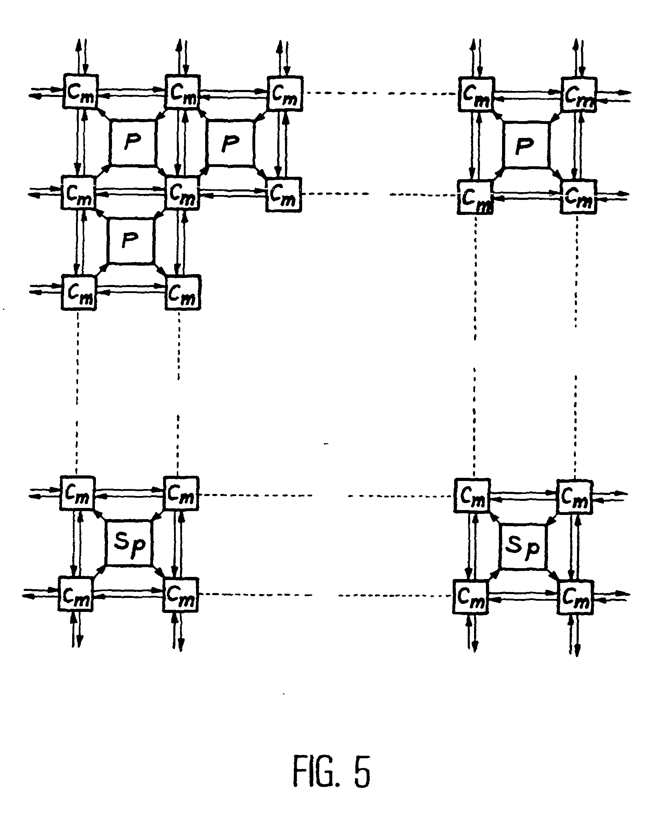

Comme illustré sur la figure 5, dans le réseau de l'invention, chaque processeur P est relié à quatre éléments d'interconnexion Cm, deux de ces éléments Cm diamétralement opposés étant connectés aux deux entrées du processeur et les deux autres éléments Cm, également diamétralement opposés, étant connectés aux deux sorties du processeur. Ces éléments d'interconnexion Cm sont de plus reliés entre eux par des liaisons horizontales ou verticales.

Chaque communication entre processeurs P se fait par l'intermédiaire d'éléments d'interconnexion Cm. On obtient ainsi 50% de connexions internes supplémentaires par rapport aux connexions « fonctionnelles » et des connexions supplémentaires avec l'extérieur réduites aux connexions des processeurs supplémentaires Sp.

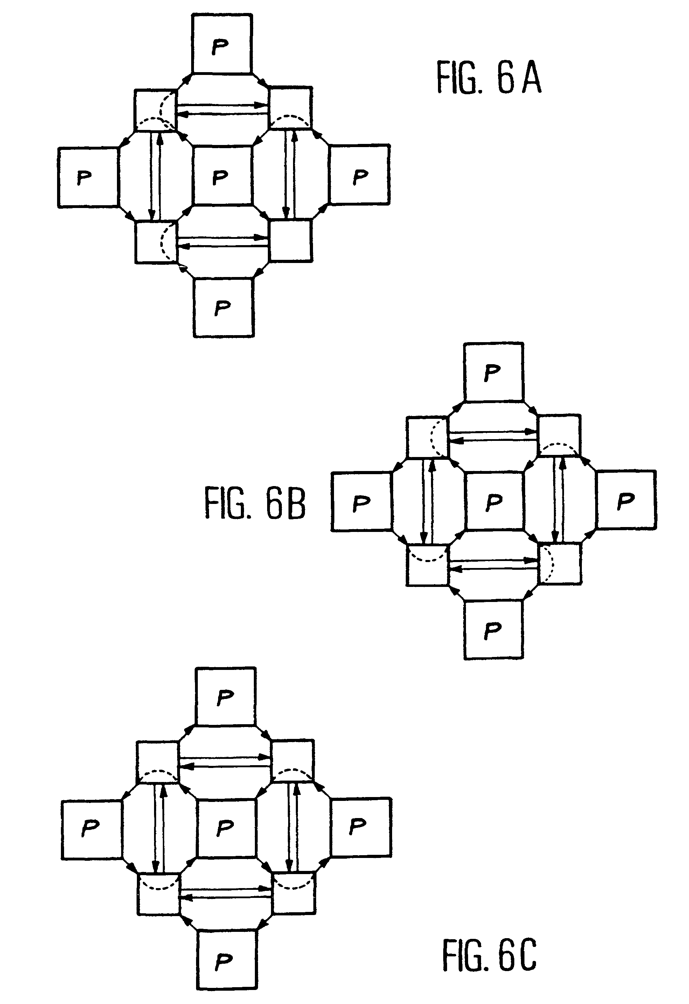

Les communications supportées par le réseau sont au minimum celles décrites sur la figure 6 : des communications sud vers nord et est vers ouest étant illustrées sur la figure 6A ; des communications mélangées étant illustrées sur la figure 6B ; des communications est-ouest étant illustrées sur la figure 6C ; Chaque communication illustrée sur ces figures ayant une communication « duale ».

D'autres communications peuvent bien entendu être envisagées.

Dans le procédé de tolérance aux fautes de ce réseau, les processeurs supplémentaires Sp de la dernière ligne sont utilisés pour remplacer des processeurs élémentaires P défaillants dans les autres lignes.

### Procédé de reconfiguration

Dans la structure « m-Track, n-Spare » de l'art connu, illustrée sur la figure 1, le procédé de reconfiguration consiste à rechercher un chemin appelé « chemin de compensation » pour remplacer un processeur élémentaire fautif par un processeur supplémentaire. Ensuite en partant de ce processeur élémentaire fautif, chaque processeur est remplacé par le processeur suivant disponible, le plus proche sur le chemin. Mais ce procédé n'est vraiment efficace que lorsque des processeurs supplémentaires existent dans au moins une ligne et une colonne, ce qui n'est pas possible avec une ligne de processeurs supplémentaires et deux chemins monodirectionnels. De plus un tel procédé ne permet pas de réduire le nombre de commutateurs dans les chemins de communication.

Par contre le procédé de reconfiguration de l'invention est basé sur une technique de placement décorrélé du routage.

Le placement consiste en un placement physique des processeurs voisins logiques. La place logique d'un processeur est la place que ce processeur occupe dans le réseau sans processeur fautif ; la place physique d'un processeur est la place occupée par ce processeur après application du procédé lorsqu'une faute a été détectée. Le placement est sûr d'aboutir à condition que le nombre de processeurs fautifs soit inférieur ou égal au nombre de processeurs supplémentaires.

Le routage consiste en une programmation des éléments d'interconnexion. Le nombre de commutateurs qui peut être traversé entre deux processeurs voisins est choisi. Ce nombre est limité : trois ou quatre commutateurs conduisent à un bon rendement de reconfiguration. L'algorithme de routage peut ainsi essayer le plus grand nombre de possibilités de routage dans un temps très court avec un algorithme approprié.

Dans les systèmes de l'art antérieur, la programmation des éléments de commutation est assurée dès lors qu'une place de remplacement est trouvée pour chaque processeur en suivant un algorithme précis. Les algorithmes de placement des processeurs sur la grille physique et de routage des éléments de commutation sont indissociables.

Dans le procédé de l'invention, seul le placement des processeurs est original. Le routage des éléments d'interconnexion est effectué par un algorithme de recherche du plus court chemin connu de l'homme de métier, cet algorithme étant utilisable dans l'invention grâce aux restrictions faites sur la longueur des chemins et, notamment, sur le nombre d'éléments d'interconnexions traversés.

### • Etape de placement

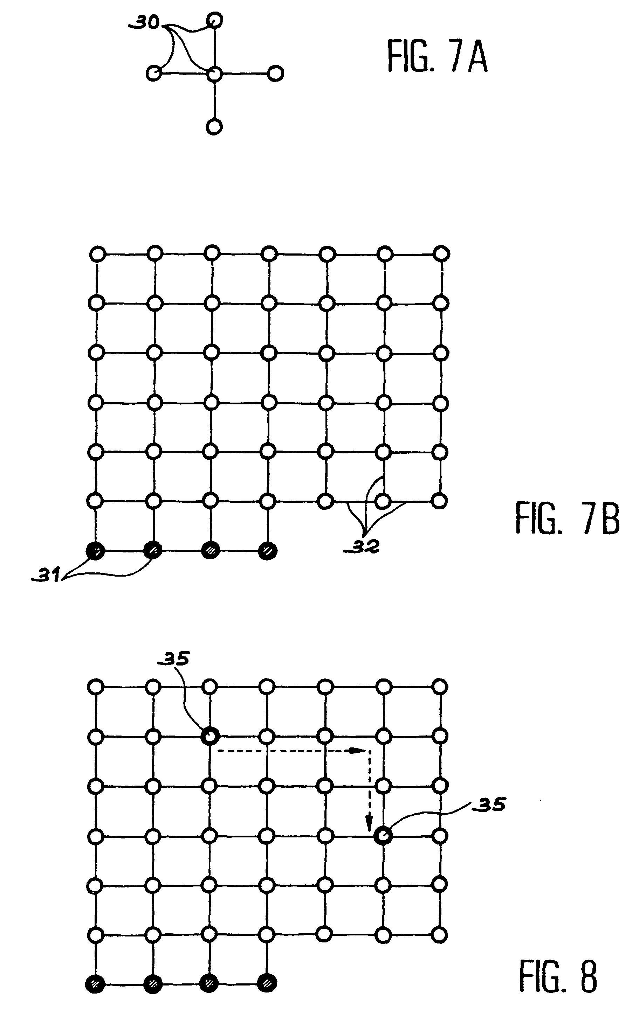

Sur les figures 7 et 8 est illustré schématiquement un réseau de processeurs élémentaires identiques 30, chaque processeur élémentaire étant logiquement connecté avec un nombre identique de processeurs voisins du même réseau, à l'exception des processeurs situés sur les bords du réseau, et de processeurs supplémentaires 31 prévus chacun pour remplacer un des processeurs élémentaires 30 en cas de faute de celui-ci.

La figure 7A illustre un processeur du réseau avec ses quatre voisins logiques. La figure 7B illustre un exemple de réseau, les processeurs supplémentaires 31 étant indiqués en grisé, les liaisons 32 étant les liaisons logiques.

La figure 8 illustre la notion de distance entre deux processeurs : celle-ci est le nombre minimum de connexions nécessaires pour aller d'un processeur à un autre. Les deux processeurs 35 cerclés de noir sont à une distance de cinq l'un de l'autre, deux processeurs voisins étant à une distance unité.

Le procédé de l'invention a pour objet de placer les processeurs dans le réseau, de manière à minimiser la somme des distances entre tous les processeurs voisins. Ce procédé présente les caractéristiques suivantes :
- Critère 1 : pour choisir les places de processeurs afin d'assurer une distance minimale entre processeurs voisins, on effectue un placement autour de la position du processeur d'origine en utilisant les processeurs à une distance 0 puis 1, puis 2, puis 3 ... de la place logique de ce processeur.
- Critère 2 : pour s'assurer qu'un placement est possible pour tous les processeurs du réseau, quel que soit le nombre de processeurs fautifs ou non validés, on définit tout d'abord un ordre de placement des processeurs qui est constitué d'un processeur d'origine et d'une suite de processeurs englobant tous les processeurs. Chaque processeur nouveau est choisi parmi les processeurs voisins logiquement des processeurs précédents. Puis, en suivant cet ordre allant du processeur d'origine au dernier processeur, on définit S+1 places possibles, S étant le nombre de processeurs supplémentaires, et l'ordre des places de chaque processeur, avec comme restriction qu'une et une seule place supplémentaire doit être utilisée par rapport aux places possibles des processeurs précédemment placés.
- Critère 3 : pour assurer la cohérence globale du réseau, on met éventuellement en place en fin de placement un mécanisme de respect de la cohérence qui consiste en une détection des inversions logiques de chaque couple de processeurs voisins logiquement dans chaque dimension et en une inversion des places des deux processeurs lorsqu'une telle inversion est détectée.

Pour remplir ces différents critères, le procédé de l'invention comprend les étapes suivantes :
- on détermine un ordre de placement des processeurs comme défini ci-dessus au critère 2 ;
- pour chacun des processeurs, on essaie de le placer en commençant par sa place logique, puis si nécessaire en cas d'échec (processeur fautif ou place occupée par un autre processeur) en chacune des places situées à une distance 1, à une distance 2 etc.., tout en respectant la loi énoncée dans le critère 2 : c'est-à-dire qu'une et une seule place supplémentaire doit être utilisée par rapport aux places possibles des processeurs précédemment placés. Si la place ne respecte pas cette loi, on essaie une autre place, qui peut être à une distance plus grande si nécessaire. On arrête lorsque S+1 places ont été essayées ;
- si S+1 places ont été essayées sans succès, on remonte au processeur précédent dans l'ordre de placement et on passe à la place suivante pour ce processeur ;
- lorsque les processeurs sont tous placés, on vérifie pour chaque dimension du système, par exemple en ligne et en colonne pour un tableau de processeurs, que l'ordre logique est respecté pour chaque couple de processeurs. Si ce n'est pas le cas, on inverse les places de ces processeurs.

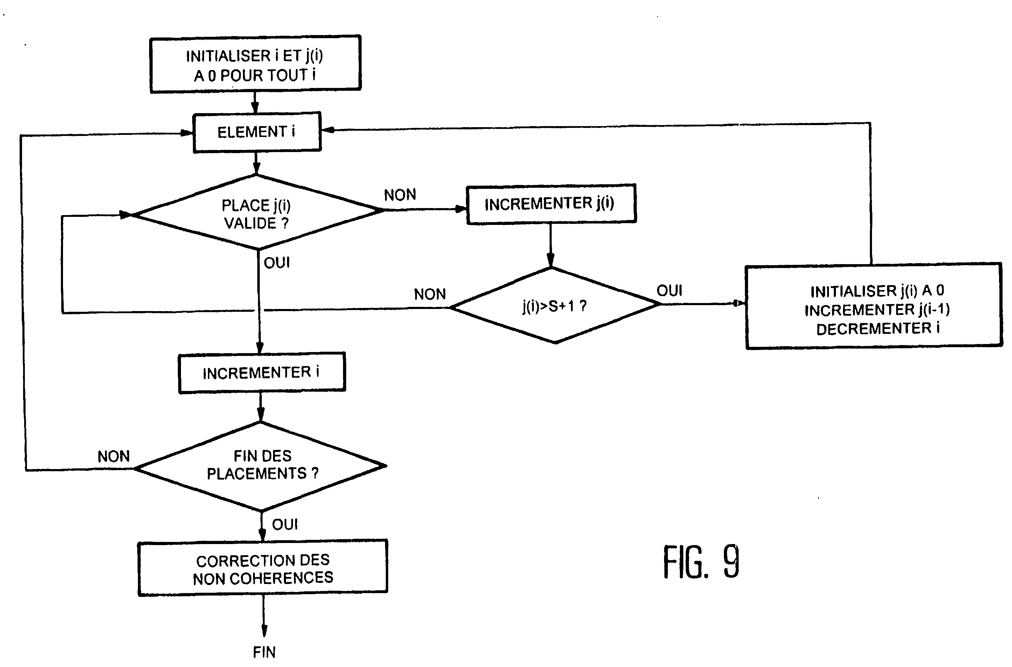

L'organigramme illustré sur la figure 9 résume les trois dernières étapes de.ce procédé.

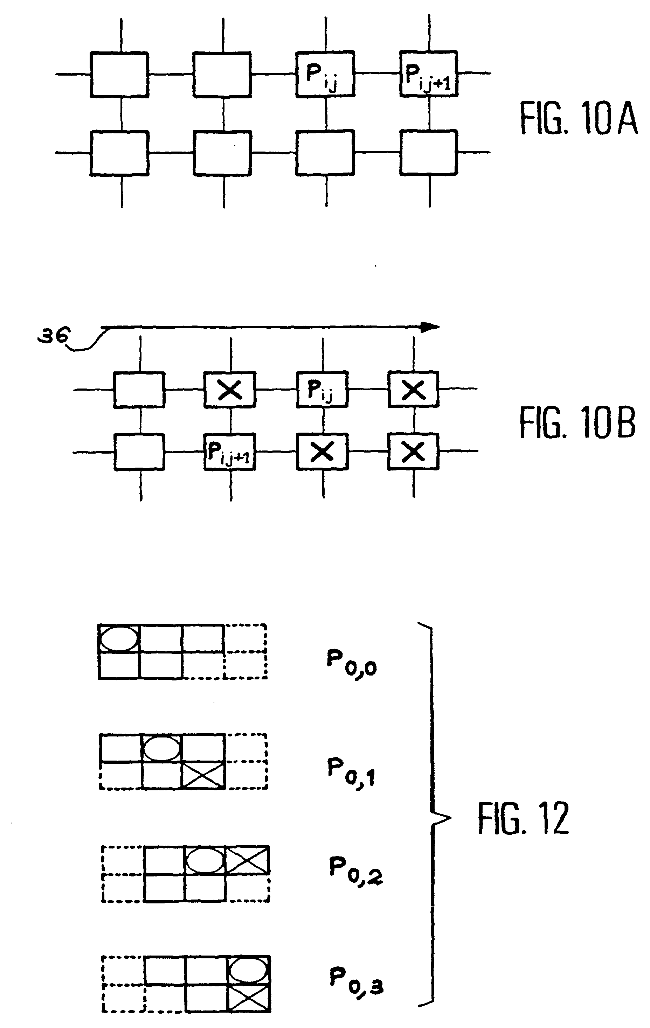

Les figures 10A et 10B illustrent un exemple de non cohérence dans le réseau après le placement des processeurs. En effet sur la figure 10A les deux processeurs Pᵢⱼ et Pᵢⱼ₊₁ sont voisins logiques et Pᵢⱼ se situe avant Pᵢⱼ₊₁. Sur la figure 10B le processeur Pᵢⱼ se trouve placé après le processeur Pᵢⱼ₋₁ contrairement à son ordre logique, la flèche 36 illustrant l'ordre de placement, les endroits marqués d'une croix indiquant des places occupées par des processeurs fautifs.

Cet algorithme de placement est certain d'aboutir à une solution du moment que le nombre de processeurs fautifs est inférieur ou égal au nombre de processeurs supplémentaires.

Deux types d'algorithmes de placement peuvent être induits du procédé de l'invention.

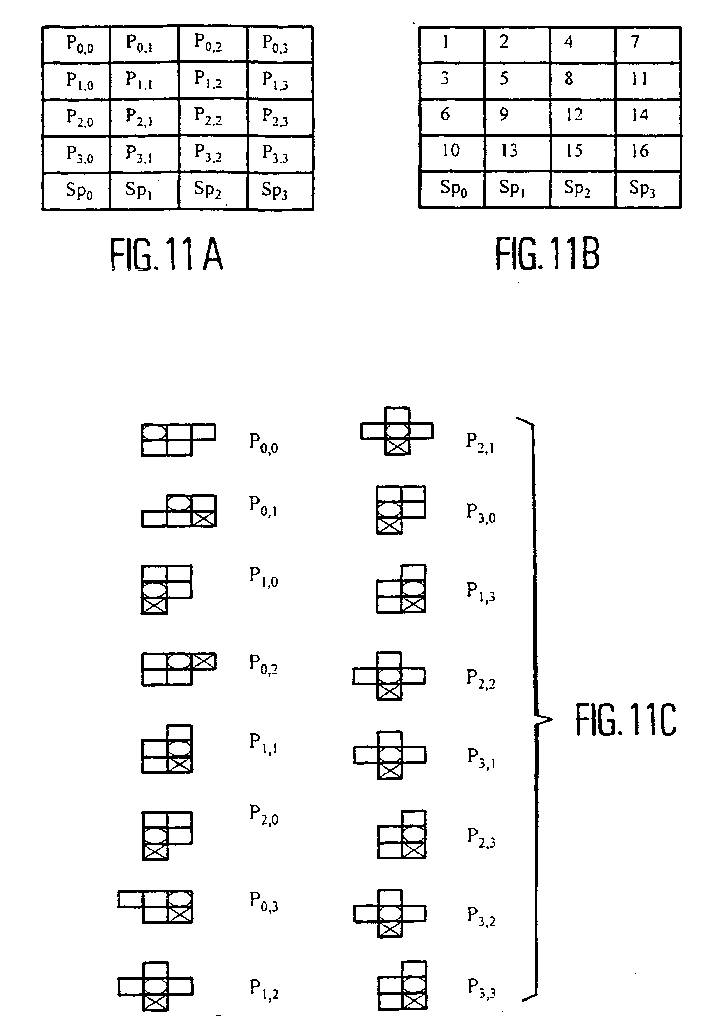

Le premier type d'algorithme consiste en une utilisation directe du procédé de l'invention et est illustré par la figure 11 avec une structure de 4x4 processeurs élémentaires et 4 processeurs supplémentaires.

la figure 11A illustre le réseau logique, les voisins logiques d'un processeur étant aux 4 points cardinaux de celui-ci. La figure 11B illustre l'ordre de placement des processeurs fonctionnels et la figure 11C illustre les places possibles de ces processeurs, les places à une distance de 1 de la place logique du processeur étant essayées avant les places à une distance de 2, etc.

Sur cette figure 11C on utilise les représentations suivantes :
○ : place logique du processeur
× : place nouvelle du processeur
□ : place possible du processeur

L'ordre de placement est défini ainsi : le processeur d'origine est le processeur en haut à gauche P_{0,0}. Les processeurs suivants sont les processeurs à droite P_{0,1} et en bas P_{1,0} du processeur d'origine P_{0,0}, et ainsi de suite en respectant la diagonale P_{1.0} ; P_{0,2} ; P_{1,1} ... (voir figure 11B). Cette solution, qui est une des solutions possibles pour le choix de l'ordre de placement, a l'avantage de permettre de bien respecter le critère 1 dans la suite, et donc de fournir un placement qui permet un bon routage. A partir de cet ordre de placement, les places de chaque processeur sont choisies parmi les cinq places définies sur la figure 11C, leur ordre de sélection respectant le critère 1. On note que, pour chaque processeur, le critère 2 est respecté.

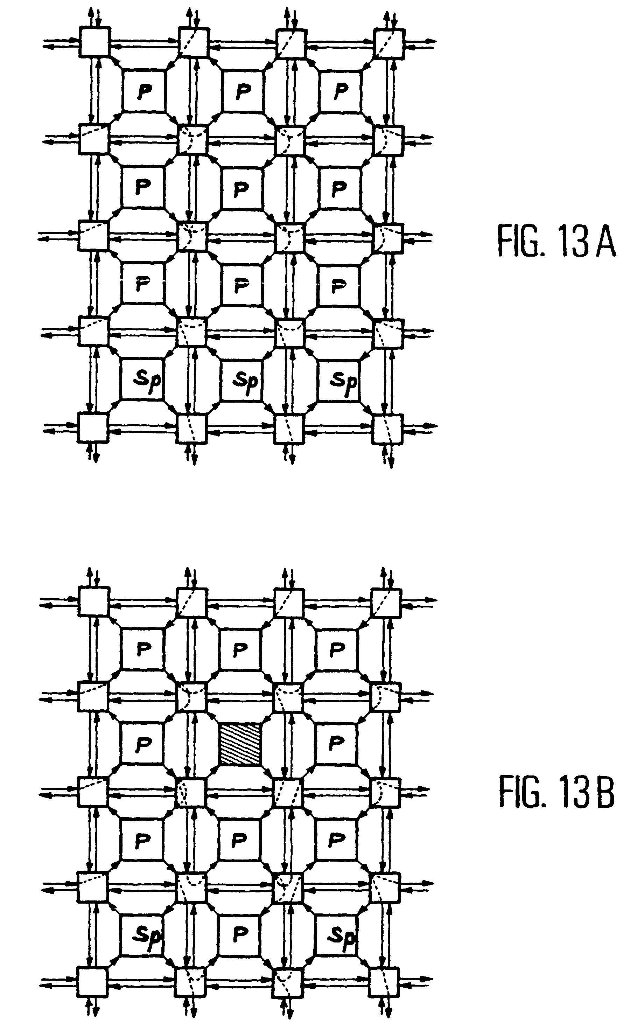

Le deuxième type d'algorithme de placement est une application du procédé de l'invention en découpant le réseau en blocs de processeurs. Après avoir défini un ordre de placement des blocs, en partant d'un bloc d'origine on parcourt tous les blocs, de bloc voisin en bloc voisin. Si un tel algorithme est appliqué à chaque bloc en tenant compte d'une règle de placement telle que les places possibles pour les processeurs d'un bloc ne comportent pas de place logique des processeurs des blocs placés précédemment, le placement est sûr. La figure 12 illustre ce deuxième type d'algorithme en considérant un bloc formé d'une ligne de quatre processeurs. Les lignes de processeurs sont alors placées en partant de la ligne du haut pour aller à la ligne du bas. Pour chaque ligne on utilise des places de cette ligne, à laquelle appartiennent les processeurs logiques, et de la ligne immédiatement inférieure, ce qui permet de respecter la règle ci-dessus. Pour chaque ligne, l'ordre de placement est défini par le processeur d'origine situé à l'extrême gauche et puis par les processeurs suivants à droite. Les cinq places possibles sont alors définies comme le montre la figure 12. Le même algorithme de placement est utilisé pour chaque ligne. La vérification de cohérence, inutile dans l'exemple considéré, ne doit alors s'effectuer que sur les lignes. L'avantage de cette variante du procédé de l'invention réside dans la rapidité de l'algorithme (moins de retour en arrière, vérification de cohérence plus courte) associée à un bon placement lorsque les blocs sont bien dimensionnés par rapport aux processeurs supplémentaires, ce qui est le cas de l'exemple considéré.

La figure 13A illustre un exemple de configuration du réseau dans une topologie de matrice, sans processeur fautif, pour des connexions ouest-est et nord-sud. La figure 13B illustre un exemple de reconfiguration du réseau dans le cas d'un processeur fautif, représenté avec des hachures.

On remarque que le passage par les éléments de commutation est obligatoire même en l'absence de processeurs fautifs, ce qui donne une certaine cohérence pour l'ensemble du système.

### • Etape de routage

Cette étape est effectuée à l'aide d'un algorithme de recherche du plus court chemin connu de l'homme du métier.

De façon à rester cohérent avec les objectifs fixés en introduction, le nombre d'éléments d'interconnexion entre processeurs voisins logiques est limité à un petit nombre, typiquement 3 ou 4. Le nombre de chemins possibles pour aller d'un processeur à un processeur voisin est connu et assez faible, moins d'une dizaine en moyenne. On suppose que tous ces chemins sont connus. Un exemple simple de l'algorithme de routage des éléments d'interconnexion est donné ci-dessous :

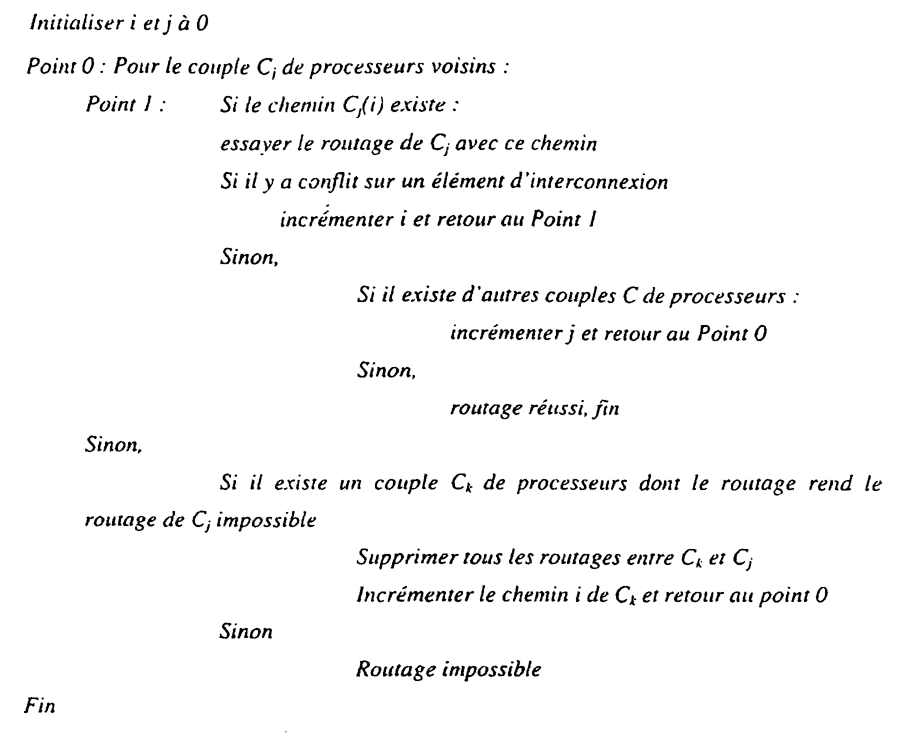

Ceci n'est qu'un exemple de routage connu de l'homme du métier permettant de donner un exemple de réalisation du procédé de reconfiguration de l'invention.

### Exemple d'un mode de réalisation d'un réseau de processeurs selon l'invention

Dans ce mode de réalisation le réseau de processeurs est constitué d'une matrice de neuf processeurs et de seize éléments d'interconnexion. Chaque processeur P est un simple élément de calcul intégrant une unité logique et arithmétique, un ensemble de registres de travail et une logique de test permettant d'effectuer le test automatique du processeur (test dit « intégré »). Lors de l'exécution d'un programme de test, cette logique émet un signal de test d'intégrité t_i indiquant si le processeur est défaillant. Le processeur P n'est pas décrit ici car il est bien connu de l'homme de métier.

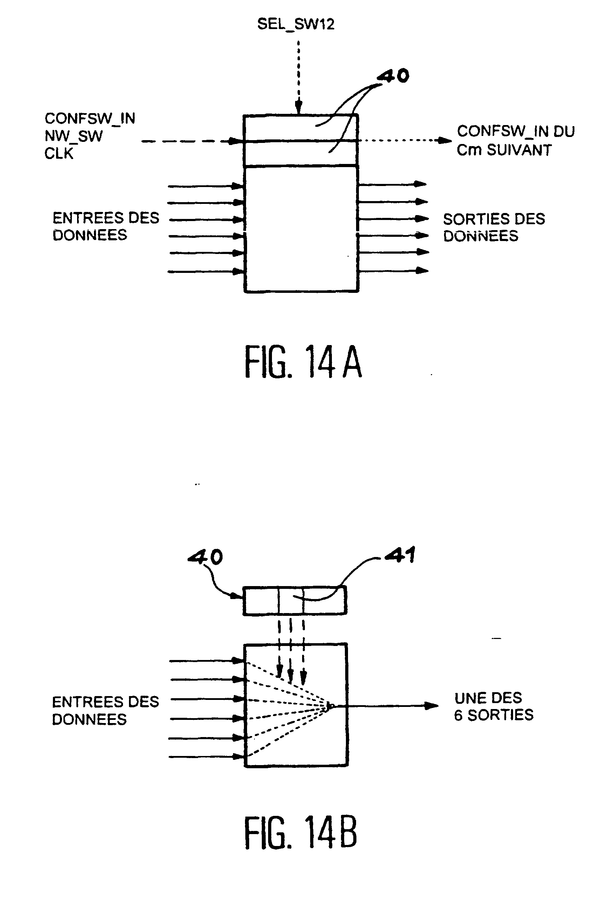

Un élément d'interconnexion est du type de celui illustré sur la figure 3, les éléments d'interconnexion des figures 4A à 4H n'étant que des dérivés simplifiés de celui-ci. Cet élément d'interconnexion, illustré sur la figure 14A, est composé de six multiplexeurs de données de six entrées vers une sortie. Chacun de ces multiplexeurs est commandé par trois fils de sélection de la voie de sortie afin de permettre de relier chacune des sorties de l'élément d'interconnexion à n'importe quelle entrée. La largeur du champ de donnée de chacune des voies est ici de 4 bits. Les sélections des six multiplexeurs sont mémorisées dans deux registres 40 de 18 bits chacun (3 bits de sélection pour chaque multiplexeur) à l'intérieur de l'élément d'interconnexion. Ces registres 40 ont une double fonctionnalité puisqu'ils peuvent fonctionner en registres normaux et en registre à décalage lors du chargement. Ces deux registres de configuration 40 permettent à deux configurations différentes du réseau de cohabiter dynamiquement.

La figure 14B illustre le détail du contrôle d'un multiplexeur, la zone 41 étant la zone de commande de ce multiplexeur dans un des registres 40.

Le chargement des deux registres de reconfiguration 40 s'effectue en série grâce aux signaux nw_sw et confsw_in. Le signal nw_sw (« not-write switch ») autorise l'écriture du signal de configuration confsw_in (« configuration switch input ») dans la première bascule d'un registre 40 lorsqu'il est à l'état bas et interdit cette écriture à l'état haut. Le chargement des configurations est synchrone et obéit donc à l'horloge globale du système clk. Lorsque l'écriture de confsw_in est autorisée dans la première bascule d'un des registres 40 le contenu de cette bascule est chargée dans la deuxième bascule et ainsi de suite jusqu'à la dernière bascule, dont le contenu constitue le signal confsw_in de l'élément d'interconnexion suivant. Le signal sel_sw12 (« selection switch configuration 1/2 ») permet de sélectionner, lors du chargement, le registre où charger les configurations et également de sélectionner la configuration des éléments d'interconnexion de manière dynamique, c'est-à-dire de faire varier la configuration des éléments d'interconnexion lors du déroulement d'un programme, à chaque coup d'horloge. Un élément d'interconnexion est ainsi composé de 24 bits de données en entrée, de 24 bits de données en sortie, de deux signaux de chargement de configuration et d'un signal de changement dynamique de configuration (en cours de fonctionnement normal) entre les configurations chargées dans les registres internes des éléments d'interconnexion.

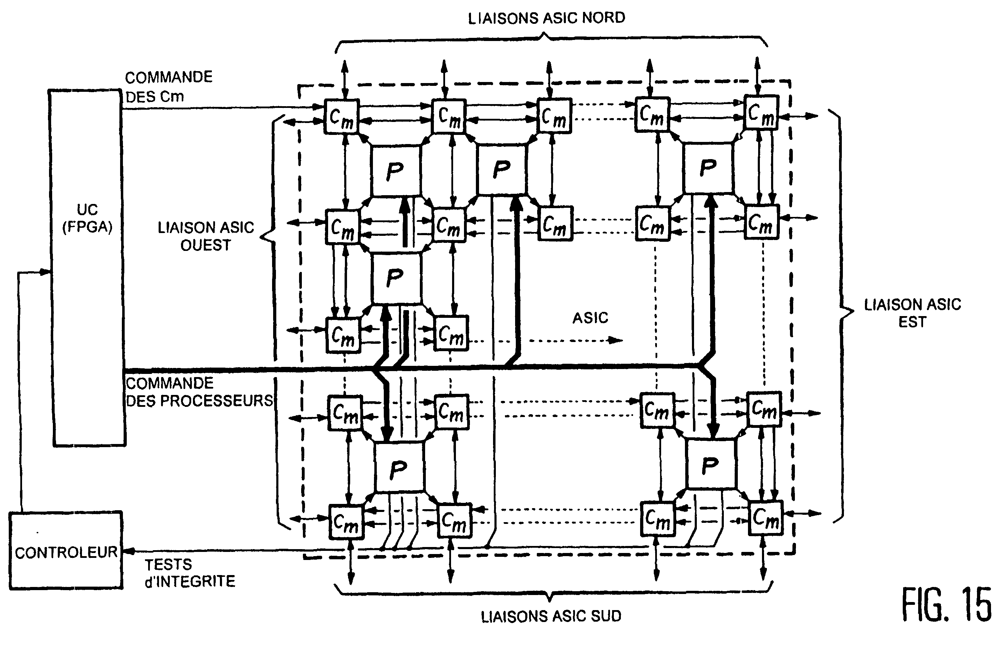

Les processeurs P et les éléments d'interconnexion Cm sont connectés comme illustré sur la figure 15. L'ensemble forme la matrice de processeurs qui est commandée par une unité de contrôle UC. Cette unité de contrôle UC envoie les instructions aux processeurs permettant d'effectuer les opérations et contrôle les éléments d'interconnexion à l'aide des trois signaux confsw_in, nw_sw et sel_sw12 précédemment cités. L'unité de contrôle permet ainsi le déroulement de programmes normaux ainsi que de programmes de test des processeurs. L'unité de contrôle effectue de façon périodique le test des processeurs qui retournent à un contrôleur leur état par l'intermédiaire du signal t_i. Le diagnostic de la matrice de processeurs est alors effectué par le contrôleur grâce à l'interprétation des signaux t_i de tous les processeurs. Le contrôleur peut effectuer le calcul des nouvelles configurations des éléments d'interconnexion correspondant à l'état de la matrice de processeurs. Il informe alors l'unité de contrôle de ces nouvelles configurations. L'unité de contrôle envoie alors les informations permettant de configurer les différents éléments d'interconnexion, puis envoie les commandes d'exécution des programmes de calculs sur les processeurs actifs.

La matrice de processeurs ainsi que les éléments d'interconnexion peuvent être intégrés dans un circuit intégré spécifique (ASIC). L'unité de contrôle peut être intégrée dans des composants de logique reconfigurable (FPGA pour « Field Programmable Gate Array »), ceci pour une plus grande souplesse d'utilisation. Le contrôleur peut être réalisé à l'aide d'un ordinateur, d'un composant FPGA ou même d'un module dédié.

Dans la description précédente, on a envisagé une commande dynamique séparée de chacun des éléments d'interconnexion par l'unité de contrôle ; on pourrait, sans sortir du cadre de l'invention, effectuer ladite commande de façon statique, sans passer par l'unité de contrôle, par exemple par le biais d'un processeur extérieur au système.

### REFERENCES

[1] « Architectures électroniques » (CEA Technologies n° 29 « Le traitement du signal et de l'image », pages 3-5)
[2] « Hardwave-Efficient and Highly-Reconfigurable 4-and 2-Track fault Tolerant Designs For Mesh-Connected Multicomputers » de Nihar R. Mahapatra et Shantanu Dutt (IEEE, 1996, pages 272 à 281)

## Revendications

1. Réseau de processeurs élémentaires parallèles avec tolérance aux fautes de ces processeurs comportant lesdits processeurs élémentaires (P), des processeurs élémentaires supplémentaires (Sp), des éléments d'interconnexion (Cm) de ces processeurs et une unité de contrôle, le réseau comprenant une succession de lignes d'éléments d'interconnexion et de lignes de processeurs en alternance, chaque processeur étant entouré de quatre éléments d'interconnexion, les lignes de processeurs étant des lignes de processeurs élémentaires, la dernière ligne de processeurs étant une ligne de processeurs élémentaires supplémentaires, les éléments de bord du réseau étant des éléments d'interconnexion ; et en ce que l'unité de contrôle, reliée aux processeurs et aux éléments d'interconnexion, envoie les instructions aux processeurs, contrôle les éléments d'interconnexion, et vérifie l'intégrité de ces processeurs, dans lequel chaque processeur (P) est relié à quatre éléments d'interconnexion (Cm), **caractérisé en ce que** deux de ces éléments diamétralement opposés sont connectés aux deux entrées du processeur (P), les deux autres éléments, également diamétralement opposés, sont connectés aux deux sorties du processeur (P), ces éléments d'interconnexion (Cm) sont reliés entre eux par des liaisons verticales ou horizontales.

2. Réseau selon la revendication 1, dans lequel les éléments d'interconnexion internes au réseau (Cm) ont une complexité de six entrées et six sorties, quatre entrées et quatre sorties étant reliées aux éléments d'interconnexion internes au réseau (Cm) voisins, et deux entrées et deux sorties étant reliées aux processeurs voisins de l'élément d'interconnexion interne au réseau (Cm) voisin considéré.

3. Réseau selon la revendication 1, dans lequel un élément d'interconnexion (Cm) possède au moins une sortie ou une entrée monodirectionnelles reliée à une entrée ou une sortie d'au moins un processeur sud-ouest, nord-est, nord-ouest ou sud-est et au moins deux entrées et deux sorties monodirectionnelles reliées à au moins deux sorties et deux entrées des éléments d'interconnexion situés au nord, à l'est, au sud ou à l'ouest.

4. Réseau selon la revendication 1, dans lequel un processeur est un élément de calcul intégrant une unité logique et arithmétique, un ensemble de registres de travail et une logique de test permettant d'effectuer le test automatique dudit processeur.

5. Réseau selon la revendication 1, dans lequel un élément d'interconnexion est composé de plusieurs multiplexeurs de données de n entrées vers une sortie, chacun de ces multiplexeurs étant commandé par les fils de sélection de la voie de sortie afin de permettre de relier chacune des sorties de l'élément d'interconnexion à n'importe quelle entrée, les sélections des multiplexeurs étant mémorisées dans deux registres internes audit élément d'interconnexion.

6. Réseau selon la revendication 1, dans lequel les processeurs et les éléments d'interconnexion sont intégrés dans un circuit intégré spécifique, l'unité de contrôle étant intégrée dans des composants de logique reconfigurable.

7. Procédé de reconfiguration du réseau de processeurs selon la revendication 1, comprenant :
- une étape de placement des processeurs fonctionnels du réseau logique ;
- une étape de routage consistant en une programmation des éléments d'interconnexion sur le réseau physique, en choisissant un nombre maximal d'éléments d'interconnexion pouvant être traversés entre deux processeurs voisins utilisant un algorithme de recherche du plus court chemin.

8. Procédé selon la revendication 7, dans lequel :
- on détermine un ordre de placement des processeurs du réseau qui est constitué d'un processeur d'origine et d'une suite de processeurs englobant tous les processeurs ;
- Pour chacun des processeurs on essaie de le placer en commençant par sa place logique puis, si nécessaire en cas d'échec, en chacune des places situées à une distance 1, à une distance 2... de la place logique de ce processeur, avec comme restriction qu'une place supplémentaire doit être utilisée par rapport aux places possibles des processeurs précédemment placés, en arrêtant lorsque S+1 places ont été essayées , S étant le nombre de processeurs supplémentaires ;
- si S+1 places ont été essayés sans succès, on revient au processeur précédent dans l'ordre de placement et on passe à la place suivante pour ce processeur.

9. Procédé selon la revendication 8, dans lequel, lorsque tous les processeurs sont placés, on vérifie pour chaque dimension du réseau, que l'ordre logique est respecté pour chaque couple de processeurs, si ce n'est pas le cas on inverse les places de ces processeurs.

10. Procédé selon la revendication 7, dans lequel l'ordre de placement est défini ainsi : le processeur d'origine est le processeur en haut à gauche, les processeurs suivants sont les processeurs à droite et en bas du processeur d'origine, et ainsi de suite en respectant une diagonale.

11. Procédé selon la revendication 7, dans lequel on découpe le réseau en blocs de processeurs et on définit un ordre de placement des blocs en partant d'un bloc d'origine et en parcourant tous les blocs de bloc voisin en bloc voisin, les places possibles pour les processeurs d'un bloc ne comportant pas de place logique des processeurs des blocs placés précédemment.

## Patentansprüche

1. Gatter von parallelen Elementarprozessoren mit Toleranz für die Fehler dieser Prozessoren, die genannten Elementarprozessoren (P), zusätzliche Elementarprozessoren (Sp), Zusammenschaltungselemente (Cm) dieser Prozessoren und eine Kontrolleinheit umfassend, wobei das Gatter eine Wechselfolge von Zusammenschaltungselemente-Zeilen und Prozessorenzeilen enthält, jeder Prozessor von vier Zusammenschaltungselementen umgeben ist, die Prozessorenzeilen Zeilen von Elementarprozessoren sind, die letzte Prozessorenzeile eine Zeile von zusätzlichen Elementarprozessoren ist, die Randelemente des Gatters Zusammenschaltungselemente sind, die mit den Prozessoren und mit den Zusammenschaltungselementen verbundene Kontrolleinheit den Prozessoren die Befehle sendet, die Zusammenschaltungselemente kontrolliert und die Integrität dieser Prozessoren verifiziert, bei dem jeder Prozessor (P) mit vier Zusammenschaltungselementen (Cm) verbunden ist,
**dadurch gekennzeichnet, dass** zwei dieser diametral entgegengesetzten Elemente mit den beiden Eingängen des Prozessors (P) verbunden sind, die beiden anderen, ebenfalls diametral entgegengesetzten Elemente mit den beiden Ausgängen des Prozessors (P) verbunden sind, diese Zusammenschaltungselemente (Cm) untereinander durch vertikale oder horizontale Verbindungen verbunden sind.

2. Gatter nach Anspruch 1, bei dem die gatter-internen Zusammenschaltungselemente (Cm) eine Komplexität von sechs Eingängen und sechs Ausgängen haben, wobei vier Eingänge und vier Ausgänge mit den benachbarten gatter-internen Zusammenschaltungselementen (Cm) verbunden sind und zwei Eingänge und zwei Ausgänge mit den dem betreffenden gatter-internen Zusammenschaltungselement (Cm) benachbarten Prozessoren verbunden sind.

3. Gatter nach Anspruch 1, bei dem ein Zusammenschaltungselement (Cm) wenigstens einen Ausgang oder einen Eingang des monodirektionalen Typs, verbunden mit einem Eingang oder einem Ausgang wenigstens eines Südwest-, Nordost-, Nordwest- oder Südost-Prozessors, und wenigstens zwei Eingänge und zwei Ausgänge des monodirektionalen Typs, verbunden mit wenigstens zwei Ausgängen und zwei Eingängen der im Norden, im Osten, im Süden oder im Westen befindlichen Zusammenschaltungselemente, besitzt.

4. Gatter nach Anspruch 1, bei dem ein Prozessor ein eine logische und arithmetische Einheit integrierendes Rechenelement ist, wobei eine Arbeitsregistergruppe und eine Testlogik ermöglichen, den automatischen Test des genannten Prozessors durchzuführen.

5. Gatter nach Anspruch 1, bei dem ein Zusammenschaltungselement durch mehrere Datenmultiplexer mit n Eingängen auf einen Ausgang gebildet wird, wobei jeder dieser Multiplexer durch die Selektionsdrähte bzw. -leitungen des Ausgangskanals gesteuert wird, um zu ermöglichen, jeden der Ausgänge des Zusammenschaltungselements mit jedem Eingang zu verbinden, wobei die Selektionen der Multiplexer in zwei internen Registern des Zusammenschaltungselements abgespeichert werden.

6. Gatter nach Anspruch 1, bei dem die Prozessoren und die Zusammenschaltungselemente in einer spezifischen integrierten Schaltung integriert sind, wobei die Kontrolleinheit in Bauelemente mit rekonfigurierbarer Logik integriert ist.

7. Verfahren zur Rekonfigurierung des Prozessorengatters nach Anspruch 1, umfassend:
- einen Platzierungsschritt der Funktionsprozessoren des logischen Gatters;
- einen Wegermittlungsschritt, bestehend aus einer Programmierung der Zusammenschaltungselemente in dem physischen Gatter, indem eine maximale Anzahl von Zusammenschaltungselementen gewählt wird, die zwischen zwei benachbarten Prozessoren durchquert werden können, wobei man einen Algorithmus zur Suche des kürzesten Wegs benutzt.

8. Verfahren nach Anspruch 7, bei dem:
- man eine Platzierungsreihenfolge der Prozessoren des Gatters festlegt, gebildet durch einen Anfangsprozessor und eine alle Prozessoren einschließende Prozessorenfolge;
- man versucht, jeden der Prozessoren zu platzieren, indem man mit seinem logischen Platz beginnt, dann, falls nötig, im Missertolgsfall, mit jedem der Plätze die sich in einem Abstand 1, in einem Abstand 2... von dem logischen Platz dieses Prozessors befinden, mit der Einschränkung, dass in Bezug auf die möglichen Plätze der vorhergehend platzierten Prozessoren ein zusätzlicher Platz benutzt werden muss, wobei man anhält, wenn S+1 Plätze versucht worden sind und S dabei die Anzahl der zusätzlichen Prozessoren ist;
- wenn S+1 Plätze erfolglos versucht worden sind, man zu dem in der Platzierungsreihenfolge vorangehenden Prozessor zurückkehrt und mit diesem Prozessor zu dem nachfolgenden Platz übergeht.

9. Verfahren nach Anspruch 8, bei dem man, wenn alle Prozessoren platziert sind, für jede Dimension des Gatters verifiziert, dass für jedes Prozessorenpaar die logische Reihenfolge respektiert ist und, wenn dies nicht der Fall ist, man die Plätze dieser Prozessoren vertauscht.

10. Verfahren nach Anspruch 7, bei dem die Platzierungsreihenfolge so definiert ist, dass der Anfangsprozessor der Prozessor links oben ist und die nachfolgenden Prozessoren die Prozessoren rechts und unterhalb des Anfangsprozessors sind, und so weiter, unter Beachtung einer Diagonalen.

11. Verfahren nach Anspruch 7, bei dem man das Gatter in Prozessorenblöcke zerlegt und eine Platzierungsreihenfolge der Blöcke definiert, indem man von einem Anfangsblock ausgeht und indem man Nachbarblock für Nachbarblock alle Blöcke durchläuft, wobei die für die Prozessoren eines Blocks möglichen Plätze keinen logischen Platz der Prozessoren der vorhergehend platzierten Blöcke umfassen.

## Claims

1. A network of parallel elementary processors tolerant of the faults of these processors comprising said elementary processors (P), spare elementary processors (Sp), interconnecting elements (Cm) of these processors, and a control unit, the network comprising alternately a series of interconnecting element lines and processor lines, each processor being surrounded by four interconnecting elements, with the processors lines being elementary processor lines, the last processor line being a spare elementary processor line, the edge network elements being interconnecting elements; and in that the control unit, connected to the processors and interconnecting elements, sends instructions to the processors, controls the interconnecting elements, and checks the integrity of these processors, wherein each processor (P) is connected to four interconnecting elements (Cm), **characterized in that** two of these diametrically opposed elements are connected to the two inputs of processor (P), the other two elements, are diametrically opposed, being connected to the two outputs of processor (P), these interconnecting elements (Cm) are connected together through vertical or horizontal links.

2. The network according to claim 1, wherein the interconnecting elements (Cm) inside the network have a complexity of six inputs and six outputs, four inputs and four outputs being connected to the interconnecting elements (Cm) inside the neighbouring network, and two inputs and two outputs being connected to the neighbouring processors of the interconnecting element (Cm) inside the considered neighbouring network.

3. The network according to claim 1, wherein an interconnecting element (Cm) has at least one unidirectional output and one unidirectional input connected to one input or one output of at least one South/West, North/East, North/West, or South/East processor, and at least two unidirectional inputs and two unidirectional outputs of the interconnecting elements located North, East, South, or West.

4. The network according to claim 1, wherein a processor is a computing element integrating an arithmetic and logic unit, a set of work registers, and a test logic allowing the automatic test of said processor to be run.

5. The network according to claim 1, wherein an interconnecting element is composed of several data multiplexers with n inputs to one output, each of these multiplexers being controlled by the wires for selecting the output channel in order to allow each of the outputs of the interconnecting element to be connected to any input, the selections of the multiplexers being stored in two internal registers of said interconnecting element.

6. The network according to claim 1, wherein the processors and the interconnecting elements are integrated in an application specific integrated circuit, the control unit being integrated in reconfigurable logical components.

7. A method for reconfiguring the processor network according to claim 1, comprising:
- a step of positioning the operational processors of the logic network;
- a routing step of programming interconnecting elements on the physical network, by choosing a maximum number of interconnecting elements which can be passed between two neighbouring processors using an algorithm for searching for the shortest track.

8. The method according to claim 7, wherein:
- a network processor positioning sequence which is composed of a starting processor and a sequence of processors including all processors is determined;
- For each of the processors, it is positioned tentatively starting with its logical position, then, if required in case of failure, in each of the positions located at a distance 1, distance 2, ... from the logical position of this processor, a restriction being that one spare position is to be used with respect to the possible positions of previously positioned processors, stopping when S+1 positions have been tested, S being the number of spare processors;
- if S+1 positions have been tested without success, returning to the previous processor in the positioning sequence and proceeding with the next position for this processor.

9. The method according to claim 8, wherein, when all processors have been positioned, it is checked for each network dimension that the logical sequence is followed for each processor pair, if not, the positions of these processors are inverted.

10. The method according to claim 7, wherein the positioning sequence is defined like this: the starting processor is the top left processor, the following processors are the processors to the right and below the starting processor, and so on, following a diagonal.

11. The method according to claim 7, wherein the network is divided into processor blocks, and a block positioning sequence is defined starting with a starting block and going through all the blocks from one neighbouring block to the next, the possible positions for the processors of one block not including any logical position of the processors of previously positioned blocks.
